# EUROPÄISCHE PATENTSCHRIFT

(11) **EP 0 862 358 B1**
(45) Veröffentlichungstag und Bekanntmachung des Hinweises auf die Patenterteilung: **28.03.2001**
(21) Anmeldenummer: 97934510.5
(22) Anmeldetag: 21.07.1997
(51) Int. Cl.: A01J 7/00, A01J 5/013, A01J 5/00

(54) **VORRICHTUNG ZUR AUTOMATISCHEN MILCHAUSSONDERUNG**
AUTOMATIC MILK SORTING DEVICE
DISPOSITIF DE TRIAGE AUTOMATIQUE DU LAIT

(30) Priorität: 25.07.1996 DE 19630146
(43) Veröffentlichungstag der Anmeldung: 09.09.1998
(73) Patentinhaber: Siliconform GmbH & CO. KG, 86842 Türkheim (DE)
(72) Erfinder: GRAUPNER, Matthias, D-04205 Leipzig (DE); MAIER, Jakob, D-86842 Türkheim (DE)
(74) Vertreter: Grünecker, Kinkeldey, Stockmair & Schwanhäusser Anwaltssozietät
(86) Internationale Anmeldenummer: EP9703932
(87) Internationale Veröffentlichungsnummer: WO9804119

(56) Entgegenhaltungen:
- EP-A- 0 054 915
- EP-A- 0 534 564
- WO-A-94/08450
- DE-A- 1 949 559
- DE-A- 2 759 126
- DATABASE WPI Section PQ, Week 8335 Derwent Publications Ltd., London, GB; Class P13, AN 83-751306 XP002045719 & SU 961 609 A (ANIMAL NON-INFECTIO) , 5.Oktober 1982 in der Anmeldung erwähnt & SU 961 609 A

## Beschreibung

Die Erfindung betrifft eine Vorrichtung zur automatischen Milchaussonderung beim maschinellen Melken, mit einer Meßeinrichtung zum Ermitteln von Parameterwerten des Milchstroms, einer Wegeventileinrichtung zum wahlweisen Leiten des Milchstroms in einen von mehreren Leitungswegen und einer zur Aussonderung von Milch basierend auf den erfaßten Parameterwerten, die Wegeventileinrichtung betätigenden Steuereinrichtung.

Bekannterweise gelangt beim maschinellen Melken Milch von einer großen Anzahl von Tieren in Sammelbehälter. Dabei kann die sich ergebende Milchqualität durch Milch von erkrankten Tieren, insbesondere solchen mit einer beginnenden und noch nicht erkannten Erkrankung, stark beeinträchtigt sein. Zur Sicherung einer hohen Milchqualität ist es daher erforderlich, während des Melkvorgangs eine Untersuchung der Milch vorzunehmen und bei Erkennung einer unzureichenden Qualität die Milch auszusondern, bevor sie in den Sammelbehälter gelangt.

Bei der Aussonderung von Milch kann man sich die Tatsache zunutze machen, daß sich der lonengehalt der Milch erkrankter Tiere von demjenigen der Milch gesunder Tiere unterscheidet. Als Parameter, anhand dessen eine Aussonderung von Milch unzureichender Qualität erfolgen kann, kann daher die Leitfähigkeit der Milch dienen.

Bekannte, auf Leitfähigkeitsmessung beruhende Vorrichtungen zur Abtrennung von Milch erkrankter Tiere sind aus der SU 961 609, der DE 27 59 126 und der WO 94/08450 bekannt. Gemäß der erstgenannten Druckschrift wird die Leitfähigkeit von Milch in dem kurzen Milchschlauch zwischen dem Melkbecher und dem Sammelstück mittels zweier Elektroden gemessen und im Sammelstück erfolgt eine Trennung in qualitätsgerechte Milch und Mastitismilch. Die Strömungsverhältnisse im Sammelstück sind jedoch derart, daß infolge Strömungsschattenbildung nur eine sehr uneffiziente Spülreinigung durchgeführt werden kann. Darüber hinaus dürften bei der dargestellten Ausführungsform auch erhebliche Vakuumverluste auftreten, so daß durch diese Vorrichtung die Forderung nach einem stabilen Vakuum an der Zitze nicht erfüllt werden kann. Ein in der WO 94/08450 beschriebenes Sammelstück ist in eine obere und untere Kammer unterteilt, wobei die obere Kammer zum Auffangen der abzusondernden Milch dient. Sensoren zum Erfassen von Parametern befinden sich an den Einlaufstutzen der vier kurzen Milchschläuche zwischen Melkbecher und Sammelstück. Die Umschaltung erfolgt über Ventile, die die Milch jeweils in die untere oder obere Kammer umleiten. Auch bei dieser Vorrichtung dürften Probleme bei ihrer Reinigung und Desinfektion in einem Spülkreislauf auftreten.

Die Wahl der Melkzeugzentrale als Meßort ist u.a. aus der Patentschrift DE 1949559 bekannt. Die Zentrale ist in 4 Kammern unterteilt, in die die Elektroden für die Leitfähigkeit eingebaut sind. Eine andere Ausführung wird in der europäischen Patentschrift EP 0054915 beschrieben. In der Zentrale befinden sich vier Teilkammern, in denen ein Teil der Milch jedes Viertels gesammelt und die Leitfähigkeit bestimmt wird. Um einen Austausch der Milch in den Kammern zu erreichen, befinden sich Abflußöffnungen am Boden der Meßkammem. Dadurch fließt immer ein Teil der Milch aus der Meßkammer zurück in das Sammelstück. Mit verändertem Milchstrom kann aber auch ein wechselnder Füllstand in der Meßkammer entstehen, der ungenaue Messungen insbesondere bei niedrigen Milchströmen zur Folge hat. Ein Verstopfen des Abflusses der Meßkammer führt dazu, daß es kaum noch zu einem Austausch der Milch in der Meßkammer kommt. Allen diesen Leitfähigkeitssensoren ist gemeinsam, daß elektrische Leitungen im Trittbereich des Tieres angebracht werden müssen, was zu einer erhöhten Störanfälligkeit führen kann.

Es ist die Aufgabe der vorliegenden Erfindung, eine neue Vorrichtung zur automatischen Milchaussonderung der eingangs erwähnten Art zu schaffen, die gegenüber herkömmlichen derartigen Vorrichtungen den sich aus der Qualitätssicherung für die Milch ergebenden Erfordernissen in höherem Maße gerecht wird.

Die diese Aufgabe lösende Vorrichtung zur automatischen Milchaussonderung nach der Erfindung ist dadurch gekennzeichnet, daß die Wegeventileinrichtung ein Gehäuse mit einem Milcheingang und mehreren Milchausgängen sowie eine Verschlußeinrichtung zur wahlweisen Absperrung der Milchausgänge aufweist, und daß in dem Gehäuse eine über wenigstens eine Öffnung mit dem Gehäuseinneren in Fluidverbindung stehende Meßkammer mit einer Sensoreinrichtung zur Erfassung von Parameterwerten angeordnet ist.

Durch die erfindungsgemäße Anordnung einer den Milchstrom für die Messung geeignet beruhigenden Meßkammer im Inneren eines durchströmten Wegeventilgehäuses, läßt sich eine effiziente Spülreinigung der Meßkammer in einem Spülkreislauf erzielen, indem insbesondere die durch die Anordnung der Meßkammer innerhalb des Gehäuses bewirkte Strömungsquerschnittsverringerung für eine intensive Spülströmung sorgt. Darüber hinaus ergibt sich durch die erfindungsgemäße Anordnung der Meßkammer innerhalb des Wegeventilgehäuses bei geringen Vakuumverlusten eine kompakte Baugröße, die es ohne Störung des Melkbetriebs ermöglicht, die Vorrichtung an jeder gewünschten Position zwischen den Melkbechern und Sammelleitungen anzuordnen.

In einer bevorzugten Ausführungsform der Erfindung ist auch die Verschlußeinrichtung innerhalb des Gehäuses zur wahlweisen Absperrung der Milchausgänge bewegbar angeordnet, was zu einer weiteren Verringerung der Baugröße und Erhöhung der Vakuumdichtheit führt.

In weiterer vorteilhafter Ausgestaltung der Erfindung ist vorgesehen, daß die vorzugsweise als die Milchausgänge abdeckender Absperrschieber ausgebildete Verschlußeinrichtung mit einer bewegbar vorgesehenen Meßkammer verbunden und der Absperrschieber zur wahlweisen Absperrung der Milchausgänge über die Meßkammer bewegbar ist. Vorzugsweise ist die Meßkammer mit der Verschlußeinrichtung zur wahlweisen Absperrung der Milchausgänge um eine Achse drehbar; bei vorzugsweise zylindrischer Ausbildung des Wegeventilgehäuses um dessen Zylinderachse. Bei einer solchen Ausbildung des Wegeventilgehäuses ist der mit der Meßkammer verbundene Absperrschieber, der einstückig mit der Meßkammer ausgebildet sein kann, auf der der Zylinderwand zugewandten Seite entsprechend der Zylinderwand gekrümmt, so daß in der Zylinderwand vorgesehene Milchausgänge durch Drehung der Meßkammer mit dem Absperrschieber um die Zylinderachse wahlweise geöffnet und geschlossen werden können. Diese bevorzugte Ausführungsform ermöglicht eine besonders kompakte Bauweise, und wenn darüber hinaus vorgesehen wird, daß die Meßkammer mit dem Absperrschieber während eines Spülarbeitsgangs um die Zylinderachse ständig rotieren kann, erhöht sich durch diese Bewegung der Meßkammer auch noch die Wirksamkeit der Spülung.

In weiterer vorteilhafter Ausgestaltung der Erfindung ist vorgesehen, daß die Meßkammer in der Art eines einseitig offenen Gefäßes mit der Verschlußeinrichtung am Gefäßboden ausgebildet ist, wobei die Gefäßöffnung in den verschiedenen Verschlußstellungen im wesentlichen nach oben weist. Das Gefäß dient damit als Auffangbehälter, in dem die Milchströmung für die Parametermessung geeignet beruhigt und als Voraussetzung für reproduzierbare Parametermessungen, insbesondere Leitfähigkeitsmessungen, blasenfrei gemacht wird.

Über der Gefäßöffnung kann eine Prallplatte mit Durchgangsöffnungen angeordnet sein, die den Milchzustrom in die Kammer reguliert, wobei eine solche Prallplatte insbesondere bei solchen Ausführungsformen vorteilhaft ist, bei denen der Milcheingang in den Absperrstellungen der Meßkammer der Gefäßöffnung gegenüberliegend angeordnet ist.

In weiterer vorteilhafter Ausgestaltung der Erfindung weist die Meßkammer eine durch einen Wandabschnitt des Gehäuses abgedichtete Öffnung mit Abmessungen derart auf, daß eine an dem Gehäusewandabschnitt vorgesehene Sensoreinrichtung für die Erfassung der Milchparameterwerte in jeder Absperrstellung der Meßkammer in Fluidverbindung mit der Meßkammer steht. Durch eine solche Ausbildung der Meßkammer mit einer Öffnung kann vorteilhaft vermieden werden, daß von der bewegbaren Meßkammer entsprechend beweglich vorzusehende Leitungen von Sensoren wegführen, indem die Sensoren z.B. in Durchgängen in dem die Meßkammer in jeder Absperrstellung begrenzenden Wandabschnitt des Gehäuses angeordnet sind. Vorzugsweise ist eine Federeinrichtung vorgesehen, die die Meßkammer mit der abzudichtenden Öffnung gegen den Wandabschnitt drückt.

In einer weiteren bevorzugten Ausführungsform ist in der Meßkammer wenigstens eine Ablauföffnung vorgesehen, so daß in jeder Absperrstellung die Milch aus der Meßkammer ablaufen kann, wenn der Milchzustrom durch den Milcheingang versiegt oder unterhalb eines vorbestimmten Schwellenwerts liegt. Diese Maßnahme ist insbesondere in Verbindung mit einer solchen Ausführungsform der Vorrichtung vorteilhaft, bei der vorgesehen ist, daß in einer Stellung des Absperrschiebers sämtliche Milchausgänge verschlossen sind. In dieser Stellung liegt kein Vakuum mehr am Euter an, und der Melkvorgang ist beendet. Würde die Meßkammer nach Versiegen des Milchstroms weiterhin gefüllt bleiben, so könnte das Versiegen des Milchstroms und damit die Notwendigkeit zum Abbruch des Melkvorgangs anhand von für die entleerte Meßkammer charakteristischen Parameterwerten nicht erfaßt werden. Kann die Milch aber ablaufen, so läßt sich ein auf die Notwendigkeit zum Abbruch des Melkvorgangs hinweisender charakteristischer Parameterwert ermitteln und in Reaktion darauf der Melkvorgang durch Schließen aller Milchausgänge automatisch abbrechen.

Die zur Aussonderung von Milch basierend auf den erfaßten Parameterwerten die Wegeventileinrichtung betätigende Steuereinrichtung umfaßt vorzugsweise einen zur komplexen Datenauswertung von Meßwerten geeigneten Steuerrechner, der durch die Meßeinrichtung erfaßte Parametermeßwerte mit Schwellenwerten vergleicht und Signale für die Steuerung der Wegeventileinrichtung erzeugt, so daß der Milchstrom über einen jeweils ausgewählten Milchausgang abfließt.

Bei Messung der Milchleitfähigkeit als Parameter kann über den Steuerrechner insbesondere vorteilhaft eine Temperaturkompensation vorgenommen werden, indem in der Meßkammer neben der Leitfähigkeit über einen Sensor auch die Milchtemperatur ermittelt und dem Rechner zugeleitet wird. Über eine gespeicherte Leitfähigkeit-Temperatur-Funktion kann dann aus dem gemessenen Leitfähigkeitswert ein auf eine Normaltemperatur bezogener korrigierter Wert ermittelt werden. Bei Durchführung einer solchen Temperaturkorrektur besteht nicht mehr die Notwendigkeit, die Leitfähigkeit nahe dem Euter zu messen, wo die Milchtemperatur noch verhältnismäßig konstant und gleich der Körpertemperatur des gemolkenen Tieres ist.

In vorteilhafter Ausgestaltung der Erfindung kann der Steuerrechner auch so programmiert sein, daß er beim Vergleich von erfaßten Parametern mit Schwellenparameterwerten Parameterzeitprofile über den Melkzeitraum berücksichtigt und anhand entsprechend gespeicherter Funktionen Korrekturwerte für den erfaßten Parameterwert ermittelt. Beispielsweise hängt die Leitfähigkeit der Milch erkrankter Tiere vom jeweiligen Melkstadium (Vorgemelk, Hauptgemelk, Nachgemelk) ab, so daß in Abhängigkeit von der abgelaufenen Melkzeit der Steuerrechner entweder den für eine Betätigung des Wegeventils zu berücksichtigenden Schwellenwert entsprechend der diesbezüglichen Zeitfunktion ändert oder den gemessenen Leitfähigkeitswert entsprechend dieser Zeitfunktion korrigiert.

Vorteilhaft können in dem Steuerrechner zu Korrektionszwecken auch als Normale dienende Parameterwerte gespeichert sein, die z.B. während eines Spülarbeitsgangs nach Ablauf einer bestimmten Spülzeit ermittelt werden und z.B. repräsentativ für das reine, die Meßkammer ausfüllende Spülmittel sind. Zum Zwecke der Ermittlung eines solchen Normalwerts, insbesondere eines Leitfähigkeitsnormalwerts, kann auch eine Standardmeßzelle, bei der es sich insbesondere um eine die Meßgeometrie der Meßkammer in der Wegeventileinrichtung nachbildende Meßkammer handelt, an einer geeigneten, strömungsberuhigten Stelle im Leitungssystem angeordnet werden. Eine ständige Kalibrierung der Vorrichtung ist bei Leitfähigkeitsmessung erforderlich, weil die zur Messung verwendeten Elektroden einem verhältnismäßig großen Verschleiß unterliegen.

In weiterer vorteilhafter Ausgestaltung der Erfindung kann der Steuerrechner auch so programmiert sein, daß er Parameterwerte von vorangegangenen Melkzyklen berücksichtigt. Ist beispielsweise die Milch eines Tiers wegen mangelnder Qualität komplett ausgesondert worden, so kann in einem unmittelbar darauf folgenden Melkzyklus vorgesehen sein, daß über den Steuerrechner die Milch unabhängig von deren Qualität zunächst über einen vorbestimmten Zeitraum ausgesondert wird, bis die Meßkammer soweit durchgespült ist, daß sich zuverlässige, durch den vorangehenden Melkzyklus unbeeinflußte Werte ergeben.

In einer weiteren bevorzugten Ausführungsform der Erfindung sind die Wegeventileinrichtung und die Meßeinrichtung zum Erfassen von Parameterwerten der Leitfähigkeit des Milchstroms jeweils für jede Zitze vorgesehen. Die gesonderte Überwachung der Milch aus jeder Zitze ist zweckmäßig, da bei Eutererkrankungen eine Qualitätsbeeinträchtigung der Milch auf einzelne Zitzen beschränkt sein kann.

Die Erfassung der Milchleitfähigkeit zum Zwecke der Aussonderung von Milch kann über diesen Zweck hinaus der allgemeinen gesundheitlichen Überwachung der Tiere dienen, indem durch die erfolgte Aussonderung an sich und durch Analysen der ausgesonderten Milch Krankheiten, insbesondere schon in deren subklinischem Vorstadium, in dem die bereits eingetretene Erkrankung noch nicht an äußerlich sichtbaren Veränderungen erkannt werden kann, diagnostizierbar sind.

Ferner kann über den Aspekt der Aussonderung qualitätsbeeinträchtigter Milch hinaus die vorliegende Erfindung auch lediglich zur Trennung unterschiedlicher, aber in jedem Falle brauchbarer Milchqualitäten eingesetzt werden. In diesem Zusammenhang ist z.B. die Messung des Eiweiß-, Fett- und Laktosegehalts als Parameter denkbar, wobei der Steuerrechner über entsprechende geeignete Schwellenwerte die Wegeventileinrichtung steuert, um jeweils eine bestimmte Milchqualität einem der entsprechend der Anzahl der Qualitätsklassen vorgesehenen Milchausgänge zuzuordnen.

Beispielsweise könnte eine solche Aufteilung der Milch nach ihrem Fettgehalt bei von Tier zu Tier konstantem Gehalt aber auch ohne die Messung von Parametern lediglich anhand einer im Steuerrechner gespeicherten Abhängigkeit des Fettgehalts von der Melkzeit durchgeführt werden, wobei zu im Steuerrechner gespeicherten Zeitpunkten nach bestimmten Melkzeiten jeweils ein anderer Milchausgang ausgewählt wird.

Vorteilhaft könnte, insbesondere in Verbindung mit einem Milchflußmesser, die erfindungsgemäße Vorrichtung auch dazu verwendet werden, das am Euter anliegende Vakuum zu steuern und insbesondere konstant zu halten. Eine solche Konstanthaltung wäre dadurch möglich, daß der Absperrschieber einen zum Ablauf ausgewählten Milchausgang noch teilweise abdeckt und über den Grad der teilweisen Abdeckung der Unterdruck an der Zitze reguliert wird. Durch eine solche Maßnahme könnte insbesondere das bei zu hohem Vakuumunterdruck an der Zitze auftretende "Klettern" des Melkbechers, bei dem der Melkbecher mit seinem oberen Rand gegen das Euter drückt, verzögert werden.

Schließlich kann der Steuerrechner zur Ansteuerung der Wegeventileinrichtung auch tierbezogene Daten, z.b. eines Herdenmanagementsystems, verarbeiten, und damit eine Aussonderung der Milch bestimmter Tiere unabhängig von Parameterwerten bewirken.

Weitere vorteilhafte Ausgestaltungsmöglichkeiten gehen aus den Unteransprüchen hervor.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: eine Wegeventileinrichtung mit einer Meßkammer gemäß der vorliegenden Erfindung,
- Fig. 2: die Wegeventileinrichtung von Fig. 1 in einer geschnittenen Seitenansicht,
- Fig. 3: ein weiteres Ausführungsbeispiel für eine Wegeventileinrichtung mit einer Meßkammer gemäß der Erfindung in einer Vorderansicht,
- Fig. 4: die Wegeventileinrichtung von Fig. 3 in einer geschnittenen Seitenansicht,
- Fig. 5A und 5B: die Wegeventileinrichtung von Fig. 3 mit unterschiedlichen Stellungen der Meßkammer,
- Fig. 6: ein weiteres Ausführungsbeispiel für eine Wegeventileinrichtung gemäß der Erfindung mit einem Elektromagnet-Drehantrieb für die Meßkammer,
- Fig. 7: ein weiteres Ausführungsbeispiel für eine Wegeventileinrichtung, mit einer gegenüber den vorangehenden Ausführungsbeispielen geänderten Anordnung eines Milcheingangsstutzens,
- Fig. 8: eine Melkeinrichtung (schematisch) mit vier Melkbechern und mit vier diesen Melkbechern zugeordneten, Milch aus dem jeweiligen Melkbecher empfangenden Wegeventileinrichtungen nach der Erfindung, und
- Fig. 9A-C: die Wegeventileinrichtung von Fig.I 1 in verschiedenen Stellungen der Meßkammer unter teilweiser Abdeckung des für den Milchabfluß ausgewählten Milchausgangs.

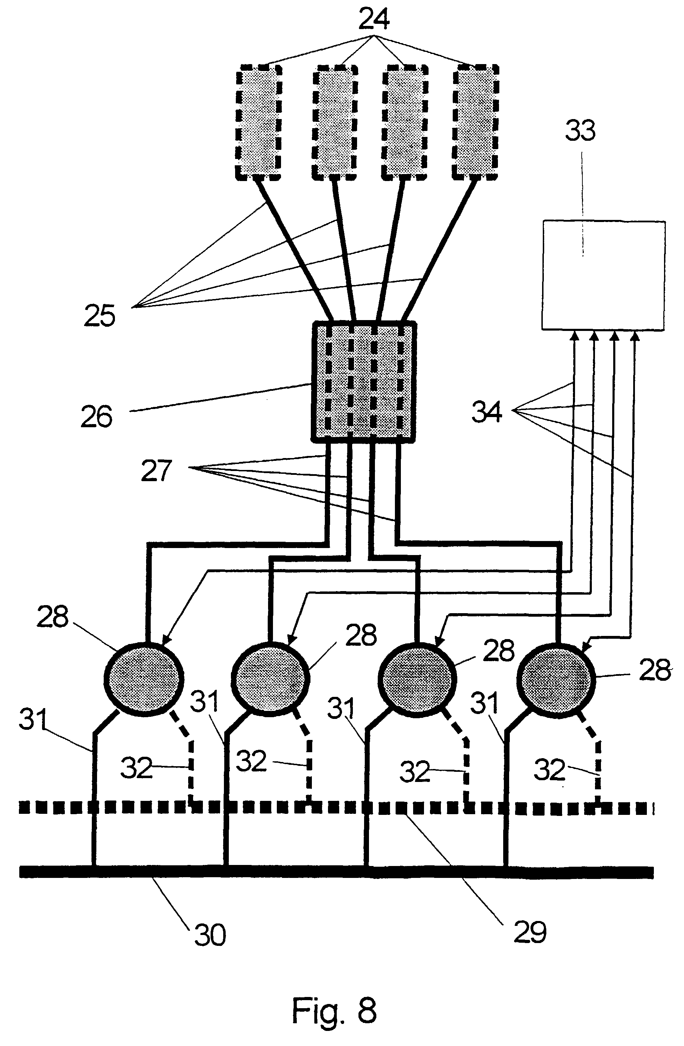

Es wird zunächst auf die schematische Darstellung von Fig. 8 Bezug genommen, wo mit dem Bezugszeichen 24 vier Melkbecher für die vier Zitzen eines Euters bezeichnet sind. Jeder Melkbecher ist mit einem kurzen Milchschlauch 25 verbunden, wobei die Schläuche 25 zu einer Viertelzentrale 26 geführt sind. Von der Viertelzentrale ist entsprechend jedem kurzen Schlauch 25 ein langer Schlauch 27 weitergeführt. An die Wegeventileinrichtungen 28 schließen sich jeweils Zweigleitungen 31 und 32 an, von denen die Zweigleitungen 31 in ein Sammelleitungssystem 30 und die Leitungen 32 in ein von dem Sammelleitungssystem 30 getrenntes Sammelleitungssystem 29 münden.

Mit dem Bezugszeichen 33 ist in der Fig. 8 eine einen Steuerrechner umfassende Steuereinrichtung bezeichnet, die über jeweilige Leitungsverbindungen 34 mit jeder der Wegeventileinrichtungen 28 verbunden ist.

Wie weiter unten erläutert wird, umfassen die Wegeventileinrichtungen 28 jeweils eine Meßkammer mit Elektroden zur Messung der Leitfähigkeit der Milch sowie einen Temperaturmeßfühler für die Ermittlung der Milchtemperatur. Die Wegeventileinrichtungen 28 umfassen jeweils ferner eine Verstelleinrichtung, vorzugsweise einen Schrittmotor (nicht gezeigt), zum Umstellen des Wegeventils zwischen den Zweigleitungen 31 und 32. Die Verbindungen 34 umfassen jeweils mehrere Verbindungsleitungen zu den Elektroden, dem Temperaturfühler und der Verstelleinrichtung, wobei über die Verbindungsleitungen von den Elektroden und dem Temperaturmeßfühler Signale zu der Steuereinrichtung 33 geliefert werden, während die Steuereinrichtung 33 jeweils Steuersignale über die an die Verstelleinrichtungen angeschlossenen Verbindungsleitungen sendet.

Im Melkbetrieb ermittelt die Steuereinrichtung 33 über die Elektroden die Leitfähigkeit der Milch in der Meßkammer von jeder Wegeventileinrichtung und vergleicht die ermittelten Leitfähigkeitswerte mit vorbestimmten, die Grenze zwischen brauchbarer und auszusondernder Milch repräsentierenden Schwellenwerten. Bei Überschreitung eines solchen Schwellenwertes wird die jeweilige Wegeventileinrichtung zwischen den Zweigleitungen 31 und 32 umgeschaltet, so daß z.B. auszusondernde Milch in das Sammelleitungssystem 29 und brauchbare Milch in das Sammelleitungssystem 30 gelangt.

Mit dem Temperaturfühler wird zusätzlich die Temperatur bestimmt und über eine in dem Steuerrechner der Steuereinrichtung 33 gespeicherte Leitfähigkeit-Temperatur-Funktion in dem Steuerrechner entweder der gemessene Leitfähigkeitswert korrigiert oder der der Signalbildung für die Steuerung der Wegeventileinrichtung zugrundeliegende Schwellenwert geändert.

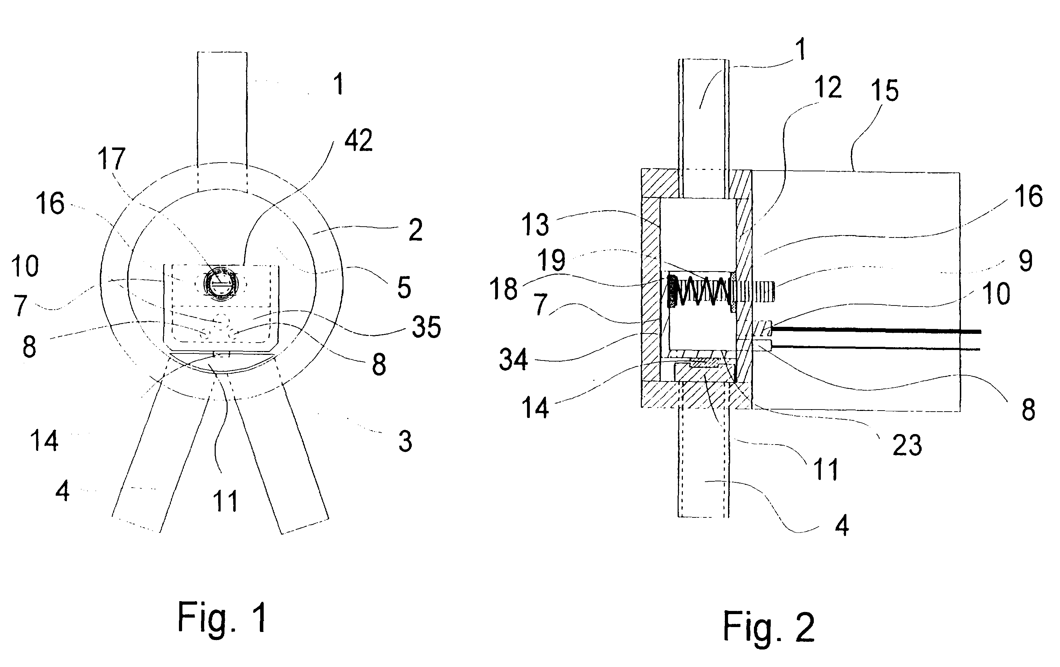

Es wird nun auf die Figuren 1 und 2 Bezug genommen, wo ein Ausführungsbeispiel für eine in der Vorrichtung von Fig. 8 verwendbare Wegeventileinrichtung mit einer Meßkammer gezeigt ist.

Mit dem Bezugszeichen 1 ist in den Figuren 1 und 2 ein Einlaufstutzen bezeichnet, der in ein Ventilgehäuse 5 einmündet, das durch ein zylindrisches Ringteil 2 sowie stimseitige Abdeckungen 12 und 13 des Ringteils gebildet ist. Etwa diametral zu dem Einlaufstutzen 1 sind an dem Ringteil 2 Auslaufstutzen 3 und 4 angeschlossen. Um Vakuumverluste zu vermeiden, kann der Auslaufstutzenquerschnitt anders als im gezeigten Ausführungsbeispiel größer als der Einlaufstutzenquerschnitt sein. Die stirnseitige Abdeckung 13 ist in dem gezeigten Ausführungsbeispiel aus einem durchsichtigen Material, insbesondere durchsichtigem Kunststoff, hergestellt, so daß der Milchdurchfluß und die Umschaltvorgänge in der Wegeventileinrichtung von außen beobachtet werden können.

In dem Gehäuse 5 ist in der Form eines einseitig offenen Gefäßes ein Meßkammer 7 angeordnet, die über eine durch die Stirnabdeckung 12 geführte Antriebswelle 9 drehbar ist. Die Antriebswelle 9 ist durch eine Öffnung in einem Wandteil 16 der Meßkammer geführt und greift mit einem stirnseitigen Quersteg 17 in eine entsprechende Ausnehmung in einem dem Wandteil 16 gegenüberliegenden Wandteil 34 der Meßkammer 7 ein. Auf der Antriebswelle 9 ist ein Ringanschlag 18 vorgesehen, gegen den ein Ende einer auf der Antriebswelle 9 angeordneten Schraubenfeder 19 anliegt, die mit ihrem anderen Ende gegen den Wandteil 16 und damit die Meßkammer gegen die Stimabdeckung 12 drückt.

Im Unterschied zu dem der durchsichtigen Stirnabdeckung 13 zugewandten Wandteil 34 der Meßkammer 7 ist der Wandteil 16 nicht durchgehend, so daß auf der der Stirnabdeckung 12 zugewandten Seite der Meßkammer 7 eine Öffnung 35 gebildet ist.

Mit dem Bezugszeichen 8 sind in den Figuren 1 und 2 Elektroden für eine Leitfähigkeitsmessung bezeichnet, wobei diese Elektroden durch eine Durchführung in der Stirnabdeckung 12 geführt sind und ihre Enden bündig mit der Innenseite der Stimabdeckung 12 abschließen. Nahe den Elektroden 8 ist in der Stimabdeckung 12 auch noch ein Temperaturfühler 10 angebracht, der wie die Elektroden nicht über die Innenseite der Stirnabdeckung 12 hinaus vorsteht.

Eine Bodenwand der Meßkammer 7 ist über einen Stift 14 mit einem der Krümmung des ringförmigen Teils 2 des Gehäuses 5 angepaßten Absperrschieber 11 verbunden. Der Absperrschieber ist in dem gezeigten Ausführungsbeispiel so bemessen, daß er in der in Fig. 1 gezeigten Stellung gleichzeitig beide Auslaufstutzen 3 und 4 absperrt. Durch diese Absperrmöglichkeit ist in den Milchleitungen kein weiterer Vakuumverschluß mehr erforderlich.

Mit dem Bezugszeichen 15 ist in Fig. 2 eine schematisch angedeutete, sich an das Gehäuse 5 anschließende Gehäusekammer bezeichnet, in der ein über ein Getriebe mit der Antriebswelle 9 verbundener Schrittmotor untergebracht ist (beides nicht gezeigt).

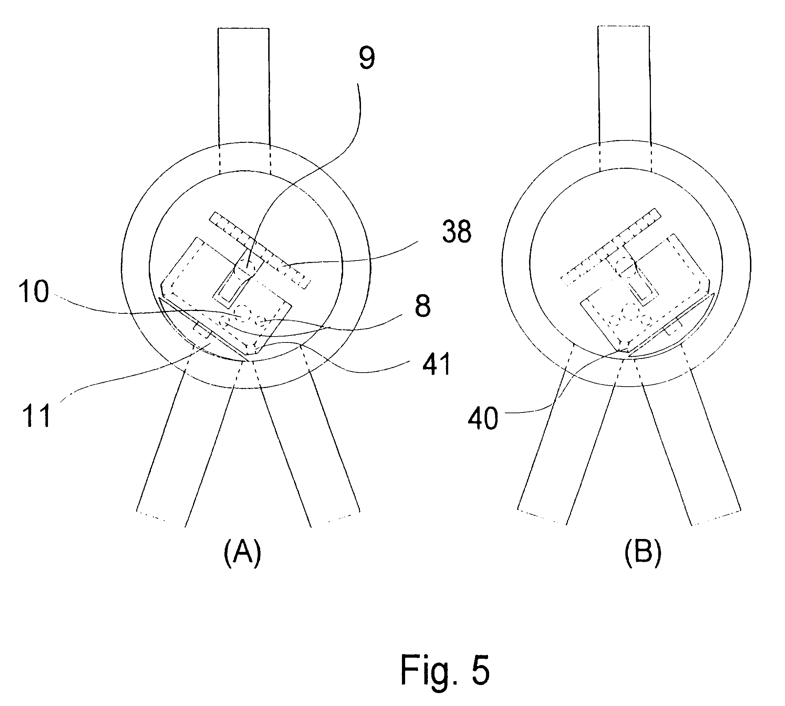

Im Betriebszustand während des Milchdurchlaufes befindet sich die Meßkammer 7 zusammen mit dem daran angebrachten Absperrschieber 11 in einer der anhand von Fig. 5 erläuterten Stellungen, in der entweder der Auslaufstutzen 4 oder der Auslaufstutzen 3 abgesperrt ist. Während des Milchdurchlaufs gelangt unter ständigem Austausch ein Teil der Milch in die als einseitig offenes Gefäß ausgebildete Meßkammer, wobei der Milchaustausch in der Meßkammer sich in so geringem Ausmaß vollzieht, daß dort eine Beruhigung der Strömung und insbesondere ein im wesentlichen blasenfreies Milchvolumen erreicht wird, an dem reproduzierbare Leitfähigkeitsmessungen über die Elektroden 8 möglich sind. Die Öffnung 35 in der Meßkammer 7 ist so bemessen, daß die zur Messung der Leitfähigkeit verwendeten Elektroden 8 wie auch der Temperaturfühler 10 in jeder Absperrstellung der Meßkammer in Fluidverbindung mit der Milch in der Meßkammer stehen. Durch die Feder 19 wird die Meßkammer gegen die Stirnabdeckung 12 gedrückt, so daß der Öffnungsrand der Öffnung 35 ausreichend gegen den Innenraum des Gehäuses 5 abgedichtet ist.

Wie anhand der Fig. 8 bereits beschrieben wurde, sendet die Steuereinrichtung 33, wenn ein erfaßter, gegebenenfalls über eine Temperaturmessung korrigierter Leitfähigkeitswert einen vorbestimmten Schwellenwert überschreitet, ein Steuersignal an den in der Fig. 2 nicht gezeigten Schrittmotor, durch den die Meßkammer von einer der anhand von Fig. 5 erläuterten Absperrstellungen in die andere gedreht wird. Damit wird die zugeführte Milch entweder durch den Auslaufstutzen 3 oder den Auslaufstutzen 4 abgeleitet und entsprechend sortiert.

Wenn der Milchstrom versiegt, was durch einen zusätzlich installierten Durchflußmesser (nicht gezeigt) festgestellt wird, gibt die Steuereinrichtung 33 ein Signal zur Drehung der Meßkammer in die in Fig. 1 gezeigte Stellung aus, in der beide Auslaufstutzen abgesperrt sind und damit der betreffende Melkbecher 24 vom Melkvakuum getrennt ist.

In einem Reinigungsspülgang kann der (nicht gezeigte) Schrittmotor durch die Steuereinrichtung 33 so angesteuert werden, daß die Meßkammer laufend vollständige Drehungen ausführt, wobei abwechselnd der Auslaufstutzen 3 und der Auslaufstutzen 4 zur Reinigung freigegeben werden. Durch diese Drehung läßt sich insbesondere eine noch effizientere Reinigung der Meßkammer erreichen, indem die in die Meßkammer eintretende Spülströmung im Zeitablauf auf unterschiedliche Wandteile der Meßkammer trifft. Darüber hinaus wird durch die Drehung der Meßkammer und die damit verbundene Relativbewegung der Kammerwände gegen das Spülmittel ein zusätzlicher Spüleffekt erzielt.

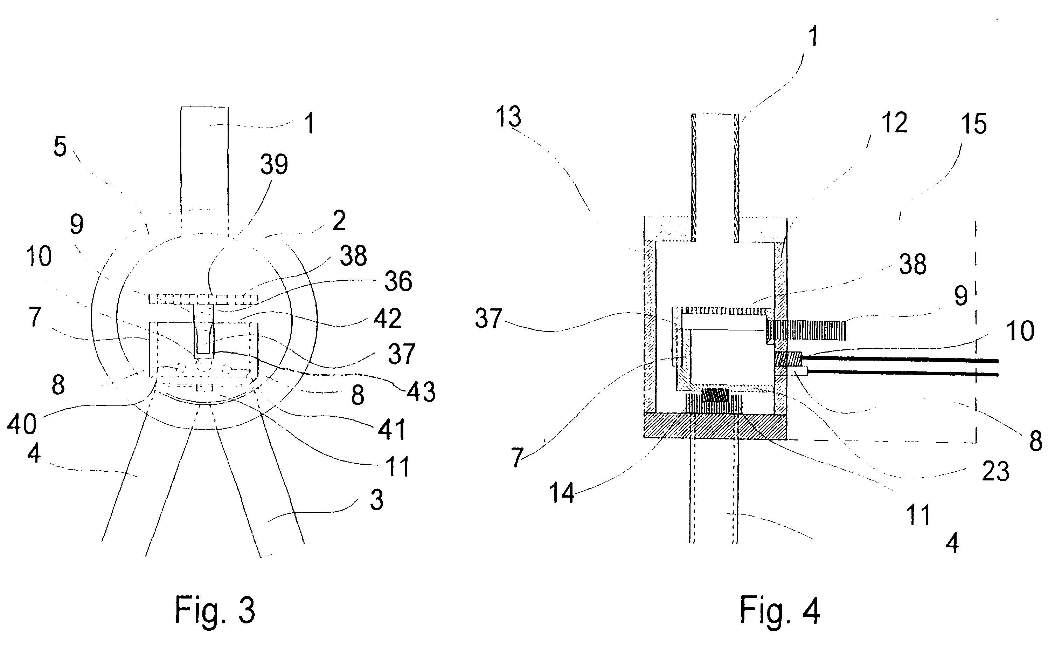

Es wird nun auf die Figuren 3 bis 5 Bezug genommen, wo ein weiteres Ausführungsbeispiel für eine Wegeventileinrichtung mit Meßkammer gezeigt ist, und wo gleiche oder gleichwirkende Teile mit der gleichen Bezugszahl wie in den vorangehenden Figuren 1 und 2 bezeichnet sind.

Das Ausführungsbeispiel gemäß den Figuren 3 bis 5 unterscheidet sich von dem vorangehenden Ausführungsbeispiel dadurch, daß sich die Antriebswelle 9 nicht durch eine Öffnung der Meßkammerwand geführt, sondern mit einem Federbügel 36, der einen gegen die Wand 34 der Meßkammer 7 anliegenden Federteil 37 aufweist, verbunden ist. Der in einer Nut 43 des Kammerwandteils 34 geführte Federteil 37 drückt die in diesem Fall ohne den Kammerwandteil 16 ausgebildete Meßkammer zur Abdichtung gegen die Stimabdeckung 12. Die Bewegungsfreiheit der Meßkammer wird nach oben durch den gegen die untere Begrenzung der Nut 43 anstoßenden Federteil 37 und nach unten durch den gegen die Wand des Gehäuses 5 anliegenden Absperrschieber 11 begrenzt. Der Federbügel 36 weist darüber hinaus eine über der Öffnung 42 der Meßkammer 7 angeordnete Prallfläche 38 mit Durchgängen 39 auf, durch die der Anteil des über den Einlaufstutzen 1 in das Gehäuse 5 eintretenden Milchstroms, der in die Meßkammer 7 gelangt, regulierbar ist.

Ein weiterer Unterschied zu der anhand der Figuren 1 und 2 beschriebenen Vorrichtung besteht darin, daß die Meßkammer 7 Auslauföffnungen 40 und 41 aufweist, wobei bei Versiegen des Milchzustroms durch den Einlaufstutzen 1 die Ablauföffnung 41 in der in Fig. 5a gezeigten Absperrstellung der Meßkammer für eine vollständige Entleerung der Meßkammer sorgt, während in der in Fig. 5b gezeigten Absperrstellung die Ablauföffnung 40 in dieser Weise wirksam wird. Durch die Ablauföffnungen 40 und 41 ist bei Versiegen des Milchstroms oder Absinken des Milchstroms auf Werte unterhalb eines vorbestimmten Schwellenwertes gewährleistet, daß sich die Meßkammer entleeren kann und ein für eine entleerte Meßkammer charakteristischer Leitfähigkeitswert meßbar ist. Der Steuerrechner der Steuereinrichtung 33 ist in dem gezeigten Ausführungsbeispiel so programmiert, daß er anhand dieses charakteristischen Leitfähigkeitswertes ein Steuersignal abgibt, durch das die Meßkammer 7 in die in Fig. 4 gezeigte Absperrstellung für beide Auslaufstutzen gedreht und dadurch unter Trennung des Melkvakuums von den Zitzen der Melkvorgang beendet wird. Durch die Ablauföffnungen 40 und 41 ist also gewährleistet, daß bei Versiegen des Milchstroms ein den Melkvorgang abbrechendes Signal ableitbar und damit der Melkvorgang automatisch zum erforderlichen Zeitpunkt abgebrochen werden kann.

Bei dem in den Figuren 1 und 2 gezeigten Ausführungsbeispiel ohne diese Ablauföffnungen ist, um diese o.g. Funktion zu gewährleisten, zusätzlich der den Milchstrom anzeigende Durchflußmesser erforderlich, aus dessen Signal die Steuereinrichtung 33 ein entsprechendes Abschaltsignal ableitet.

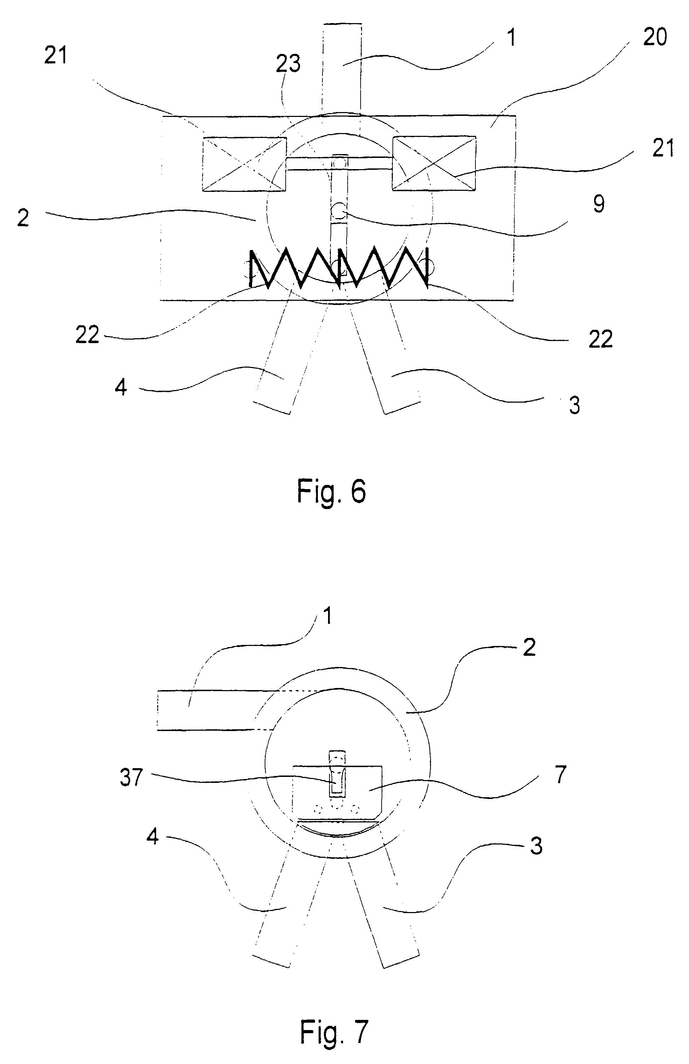

Bei dem weiteren in der Fig. 6 gezeigten Ausführungsbeispiel für eine Wegeventileinrichtung mit Meßkammer sind den vorangehenden Ausführungsbeispielen entsprechende Teile mit der gleichen Bezugszahl bezeichnet.

Bei diesem Ausführungsbeispiel sind zur Drehung der Antriebswelle 9 zwei Elektromagnete 21 vorgesehen, die das Ende eines zweiseitigen, in seiner Mitte mit der Antriebswelle 9 verbundenen Hebels bewegen. Das andere Ende des zweiseitigen Hebels ist mit einer eine rücktreibende Kraft erzeugenden Rückstellschraubenfeder 22 verbunden, wobei dieses Hebelende in der Mitte der an ihren Enden festgelegten Schraubenfeder 22 angreift, so daß in beiden Schaltstellungen der Elektromagneten eine rücktreibende Kraft in diejenige Stellung vorliegt, in der beide Auslaufstutzen 3 und 4 abgesperrt sind.

Das in der Fig. 7 gezeigte Ausführungsbeispiel, bei dem gleiche Teile wie bei den vorangehenden Ausführungsbeispielen mit der gleichen Bezugszahl bezeichnet sind, unterscheidet sich von den vorangehenden Ausführungsbeispielen dadurch, daß der Einlaufstutzen nicht diametral zu den Auslaufstutzen, sondern in einer Stellung, in welcher der Milchstrom im wesentlichen senkrecht zu der Richtung bei diametraler Stellung in das Gehäuse eintritt, angeordnet ist. Bei dem Ausführungsbeispiel von Fig. 7 ist gegenüber dem Ausführungsbeispiel gemäß den Figuren 3 bis 5 die Prallplatte weggelassen, da durch die Richtung des Einlaufs der Milchströmung in das Gehäuse von vornherein dafür gesorgt ist, daß nur ein gewünschter geringer Anteil der zuströmenden Milch unmittelbar in die Meßkammer hineinströmt.

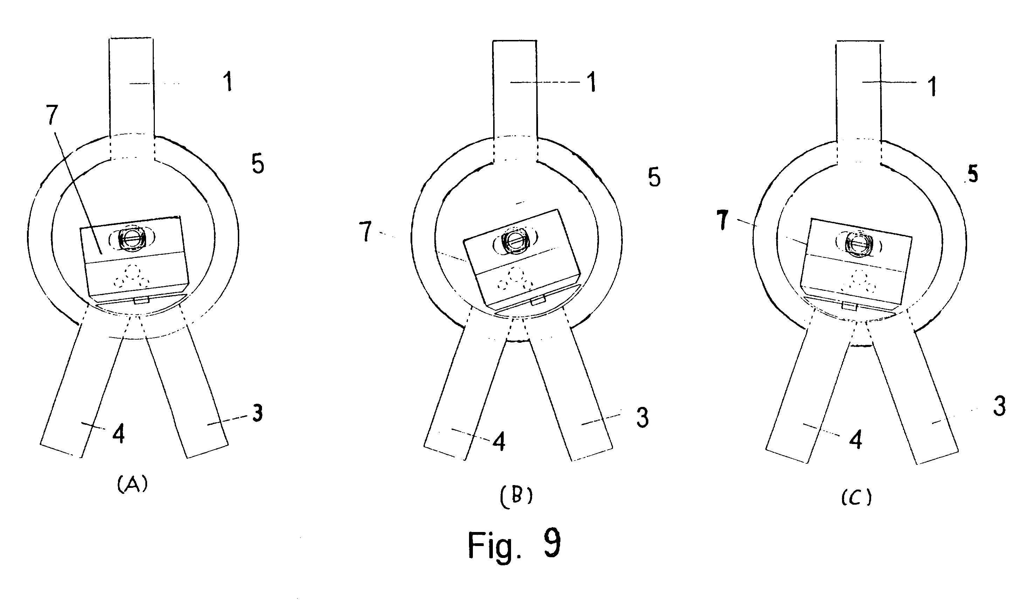

Es wird nun auf die Figuren 9A-C Bezug genommen, wo die Wegeventileinrichtung von Fig. 1 in solchen Stellungen der Meßkammer gezeigt ist, in denen ein zum Abfluß der Milch ausgewählter Milchausgang jeweils nur teilweise geöffnet ist. Über den Grad der Öffnung und eine damit verbundene Strömungsquerschnittsregulierung kann der am Euter anliegende Unterdruck geregelt und insbesondere konstant gehalten werden. Durch diese Regelung läßt sich das sog. "Klettern" des Melkbechers verzögern, wobei der an der Zitze angesaugte Melkbecher nach und nach bis zum Anschlag seines Öffnungsrandes am Euter unter Beeinträchtigung des Melkvorgangs nach oben rückt. In den Figuren 9a und b ist der zum Abführen der Milch ausgewählte Abfluß 4 teilweise verschlossen, während in 5b ein solcher Teilverschluß des Milchabflusses 3 vorgesehen ist. Der über einen nicht gezeigten Drucksensor am Euter ermittelte Unterdruck kann der Steuereinrichtung 33 zugeführt werden, welche die Stellung der Meßkammer entsprechend einem Regelkreis dann so beeinflußt, daß ein bestimmter Unterdruckzielwert erreicht wird.

## Patentansprüche

1. Vorrichtung zur automatischen Milchaussonderung beim maschinellen Melken mit
einer Meßeinrichtung (8, 10, 33) zum Ermitteln von Parameterwerten des Milchstroms,
einer Wegeventileinrichtung (28) zum wahlweisen Leiten des Milchstroms in einen von mehreren Leitungswegen (31, 32), und
einer zur Aussonderung von Milch basierend auf den ermittelten Parameterwerten auf die Wegeventileinrichtung (28) einwirkenden Steuereinrichtung (33),
**dadurch gekennzeichnet**, daß die Wegeventileinrichtung (28) ein Gehäuse (5) mit einem Milcheingang (1) und mehreren Milchausgängen (3, 4) sowie eine Verschlußeinrichtung (11) zur wahlweisen Absperrung der Milchausgänge (3, 4) aufweist, und
daß in dem Gehäuse eine über wenigstens eine Öffnung (42) mit dem Gehäuseinneren in Fluidverbindung stehende Meßkammer (7) mit einer Sensoreinrichtung (8, 10) für die Erfassung von Parameterwerten angeordnet ist.

2. Vorrichtung nach Anspruch 1, **dadurch gekennzeichnet**, daß die Verschlußeinrichtung (11) innerhalb des Gehäuses (5) angeordnet und zur wahlweisen Absperrung der Milchausgänge (3, 4) bewegbar ist.

3. Vorrichtung nach Anspruch 2, **dadurch gekennzeichnet**, daß die Meßkammer (7) mit der Verschlußeinrichtung (11) verbunden und zur wahlweisen Absperrung der Milchausgänge (3, 4) zusammen mit der Verschlußeinrichtung (11) bewegbar und die Verschlußeinrichtung (11) insbesondere über die Meßkammer (7) bewegbar ist.

4. Vorrichtung nach Anspruch 3, **dadurch gekennzeichnet**, daß die Verschlußeinrichtung einstückig mit der Meßkammer ausgebildet ist.

5. Vorrichtung nach Anspruch 3 oder 4, **dadurch gekennzeichnet**, daß die Meßkammer (7) mit der Verschlußeinrichtung (12) zur wahlweisen Absperrung der Milchausgänge um eine Achse (9) drehbar ist.

6. Vorrichtung nach einem der Ansprüche 1 bis 5, **dadurch gekennzeichnet**, daß die Verschlußeinrichtung als die Milchausgänge (3, 4) abdeckender Absperrschieber (11) ausgebildet ist.

7. Vorrichtung nach Anspruch 6, **dadurch gekennzeichnet**, daß eine den Milchausgängen (3, 4) zugewandte Absperrfläche des Absperrschiebers (11) den gleichen Krümmungsradius wie ein die Milchausgänge (3, 4) aufweisender Gehäusewandabschnitt aufweist, so daß die Milchausgänge (3, 4) wahlweise durch Verschwenkung des Absperrschiebers (11) um eine durch den Krümmungsmittelpunkt führende Drehachse absperrbar sind.

8. Vorrichtung nach einem der Ansprüche 1 bis 7, **dadurch gekennzeichnet**, daß die Meßkammer (7) in der Art eines einseitig offenen Gefäßes mit der Verschlußeinrichtung (11) am Gefäßboden ausgebildet ist.

9. Vorrichtung nach Anspruch 8, **dadurch gekennzeichnet**, daß über der Gefäßöffnung (42) eine Durchgänge (39) aufweisende Prallplatte (38) zur Regulierung des aus dem Milcheingang (1) unmittelbar in die Meßkammer (7) eintretenden Milchstroms angeordnet ist.

10. Vorrichtung nach Anspruch 8 oder 9, **dadurch gekennzeichnet**, daß die Gefäßöffnung (42) in sämtlichen Absperrstellungen der Verschlußeinrichtung (11) im wesentlichen gegenüberliegend zu dem Milcheingang (1) angeordnet ist.

11. Vorrichtung nach einem der Ansprüche 5 bis 10, **dadurch gekennzeichnet**, daß die Meßkammer (7) zur ständigen Rotation um die Achse (9) während einer Reinigungsspülung vorgesehen ist.

12. Vorrichtung nach einem der Ansprüche 1 bis 10, **dadurch gekennzeichnet**, daß die Meßkammer (7) eine durch einen Wandabschnitt (12) des Gehäuses (5) abgedichtete Öffnung (35) mit Abmessungen derart aufweist, daß wenigstens eine an dem Gehäusewandabschnitt (12) vorgesehene Sensoreinrichtung (8, 10) für die Erfassung der Milchparameter in jeder Absperrstellung der Verschlußeinrichtung (11) in Fluidverbindung mit der Meßkammer (7) steht.

13. Vorrichtung nach Anspruch 11, **dadurch gekennzeichnet**, daß eine Federeinrichtung (19, 37) vorgesehen ist, über die die Meßkammer (7) zur Abdichtung der Öffnung (35) gegen den Gehäusewandwabschnitt (12) andrückbar ist.

14. Vorrichtung nach einem der Ansprüche 1 bis 13, **dadurch gekennzeichnet**, daß die Meßkammer (7) wenigstens eine Ablauföffnung (40, 41), durch die die Entleerung der Meßkammer (7) in wenigstens einer Absperrstellung der Verschlußeinrichtung gewährleistet ist, wenn der Milchzustrom über den Milcheingang (1) auf einen Wert unterhalb eines vorbestimmten Mindestwertes abfällt.

15. Vorrichtung nach einem der Ansprüche 1 bis 14, **dadurch gekennzeichnet**, daß das Gehäuse (5) rundzylindrisch ausgebildet ist.

16. Vorrichtung nach einem der Ansprüche 5 bis 15, **dadurch gekennzeichnet**, daß die Meßkammer (7) um die Zylinderachse des Gehäuses (5) drehbar ist.

17. Vorrichtung nach Anspruch 15 oder 16, **dadurch gekennzeichnet**, daß durch wenigstens eine Stirnwand (12) des rundzylindrischen Gehäuses (5) eine Antriebswelle (9) für die Drehung der Meßkammer (7) geführt ist.

18. Vorrichtung nach einem der Ansprüche 5 bis 17, **dadurch gekennzeichnet**, daß die Meßkammer (7) durch einen Schrittmotor, vorzugsweise über ein zwischengeschaltetes Getriebe oder durch wenigstens einen über einen Hebel (23) die Antriebswelle (9) drehenden Elektromagneten (21) drehbar ist.

19. Vorrichtung nach einem der Ansprüche 1 bis 18, **dadurch gekennzeichnet**, daß das Gehäuse (5) einen durchsichtigen Wandteil (13) aufweist und vorzugsweise eine Stirnwand (13) des rundzylindrischen Gehäuses (5) durchsichtig ist.

20. Vorrichtung nach einem der Ansprüche 15 bis 19, **dadurch gekennzeichnet**, daß der Milcheingang (1) und die Milchausgänge (3, 4) in der Zylinderwand (2) des rundzylindrischen Gehäuses (5) vorgesehen und die Milchausgänge (3, 4) dem Milcheingang (1) vorzugsweise etwa diametral gegenüberliegend angeordnet sind.

21. Vorrichtung nach einem der Ansprüche 1 bis 20, **dadurch gekennzeichnet**, daß in einer Stellung der Verschlußeinrichtung (11) sämtliche Milchausgänge (3, 4) absperrbar sind.

22. Vorrichtung nach einem der Ansprüche 1 bis 21, **dadurch gekennzeichnet**, daß die Sensoreinrichtung Elektroden (8) für die Erfassung der Leitfähigkeit der Milch umfaßt.

23. Vorrichtung nach einem der Ansprüche 1 bis 22, **dadurch gekennzeichnet**, daß die Sensoreinrichtung einen Temperaturfühler (10) für die Erfassung der Milchtemperatur umfaßt.

24. Vorrichtung nach einem der Ansprüche 1 bis 23, **dadurch gekennzeichnet**, daß die Steuereinrichtung (33) einen Steuerrechner umfaßt.

25. Vorrichtung nach Anspruch 24, **dadurch gekennzeichnet**, daß der Steuerrechner zur Steuerung der Wegeventileinrichtung anhand eines Vergleichs von erfaßten Parameterwerten mit vorbestimmten Parameterschwellenwerten programmiert ist.

26. Vorrichtung nach Anspruch 24, **dadurch gekennzeichnet**, daß der Steuerrechner zur Korrektur der erfaßten Parameterwerte oder zur Anpassung der Parameterschwellenwerte basierend auf gespeicherten, auf den Melkzeitraum bezogenen Parameterwert-Zeitprofilen programmiert ist.

27. Vorrichtung nach einem der Ansprüche 1 bis 26, **dadurch gekennzeichnet**, daß vorzugsweise als Parameter die Milchleitfähigkeit, der Milcheiweißgehalt, der Milchfettgehalt, der Harnstoffgehalt, der Gehalt verschiedener Enzyme und Hemmstoffe oder/und Laktosegehalt erfaßbar ist.

28. Vorrichtung nach einem der Ansprüche 1 bis 27, **dadurch gekennzeichnet**, daß der Steuerrechner zur Temperaturabhängigkeiskorrektur erfaßter Milchleitfähigkeitswerte anhand zusätzlich gemessener Milchtemperaturwerte oder eines gespeicherten, auf den Melkzeitraum bezogenen Temperatur-Zeitprofils programmiert ist.

29. Vorrichtung nach einem der Ansprüche 1 bis 28, **dadurch gekennzeichnet**, daß der Steuerrechner zur Korrektur der gemessenen Milchleitfähigkeit anhand eines während einer Reinigungsspülung für das Spülmittel gemessenen Leitfähigkeitsnormalwertes programmiert ist.

30. Vorrichtung nach einem der Ansprüche 1 bis 29, **dadurch gekennzeichnet**, daß die Meßeinrichtung (8, 10, 33) und die Wegeventileinrichtung (28) mehrfach für jede Zitze vorgesehen sind.

31. Vorrichtung nach einem der Ansprüche 1 bis 30, **dadurch gekennzeichnet**, daß der am Euter anliegende Unterdruck durch teilweises Verschließen eines für den Ablauf der Milch vorgesehenen Milchausgangs (3, 4) steuerbar ist.

32. Wegeventilvorrichtung mit
einem Gehäuse (5) mit einem Milcheingang (1) und mehreren Milchausgängen (3, 4) sowie einer Verschlußeinrichtung (11) zur wahlweisen Absperrung der Milchausgänge (3, 4),
**dadurch gekennzeichnet**,
daß in dem Gehäuse (5) eine über wenigstens eine Öffnung (42) mit dem Gehäuseinneren in Fluidverbindung stehende Meßkammer (7) mit einer Sensoreinrichtung (8, 10) für die Erfassung von Milchparameterwerten angeordnet ist.

## Claims

1. An automatic milk sorting device for use in machine milking, comprising
a measurement device (8, 10, 33) for determining parameter values of the milk stream,
a directional valve means (28) for selectively directing the milk stream into one of a plurality of channels (31, 32), and
a control means (33) acting on said directional valve means (28) so as to sort out milk on the basis of the determined parameter values.
**characterized in that** the directional valve means (28) comprises a housing (5) provided with a milk inlet (1) and a plurality of milk outlets (3, 4), and a closure means (11) for selectively shutting off the milk outlets (3, 4), and
that the housing has arranged therein a measurement chamber (7), which is in fluid communication with the interior of the housing via at least one opening (42) and which is provided with a sensor means (8, 10) for detecting parameter values.

2. A device according to claim 1, **characterized in that** said closure means (11) is arranged in the interior of the housing (5) and is adapted to be moved so as to selectively shut off the milk outlets (3, 4).

3. A device according to claim 2, **characterized in that** the measurement chamber (7) is connected to said closure means (11) and is adapted to be moved together with said closure means (11) for selectively closing the milk outlets (3, 4), and that the closure means (11) is adapted to be moved especially via the measurement chamber (7).

4. A device according to claim 3, **characterized in that** the closure means is formed integrally with the measurement chamber.

5. A device according to claim 3 or 4, **characterized in that** the measurement chamber (7) is adapted to be rotated together with the closure means (11) about a shaft (9) for selectively shutting off the milk outlets.

6. A device according to one of the claims 1 to 5, **characterized in that** the closure means is implemented as a shut-off slide member (11) covering the milk outlets (3, 4).

7. A device according to claim 6, **characterized in that** a shut-off surface of the shut-off slide member (11) facing the milk outlets (3, 4) has the same radius of curvature as a housing wall portion including said milk outlets (3, 4) so that said milk outlets (3, 4) can selectively be shut off by rotating the shut-off slide member (11) about an axis of rotation extending through the centre of said curvature.

8. A device according to one of the claims 1 to 7, **characterized in that** the measurement chamber (7) is constructed like a vessel which is open on one side thereof, the closure means (11) being arranged on the bottom of said vessel.

9. A device according to claim 8, **characterized in that** a baffle plate (38) provided with passages (39) is arranged above the opening (42) of the vessel so as to control the milk stream which flows from the milk inlet (1) directly into the measurement chamber (7).

10. A device according to claim 8 or 9, **characterized in** **that** the opening (42) of the vessel is arranged essentially opposite the milk inlet (1) at all shut-off positions of the closure means (11).

11. A device according to one of the claims 5 to 10, **characterized in that** the measurement chamber (7) is adapted to rotate constantly about the shaft (9) during a rinsing process.

12. A device according to one of the claims 1 to 10, **characterized in that** the measurement chamber (7) is provided with an opening (35) sealed by a wall portion (12) of the housing (5) and dimensioned such that at least one sensor means (8, 10) provided on said housing wall portion (12) and used for detecting the milk parameters is in fluid communication with the measurement chamber (7) at each shut-off position of the closure means (11).

13. A device according to claim 11, **characterized in that** spring means (19, 37) are provided with the aid of which the measurement chamber (7) can be pressed against said housing wall portion (12) for the purpose of sealing the opening (35).

14. A device according to one of the claims 1 to 13, **characterized in that** the measurement chamber (7) includes at least one outlet opening (40, 41) which guarantees emptying of the measurement chamber (7) at at least one shut-off position of the closure means, when the milk stream flowing in through the milk inlet (1) decreases to a value below a predetermined minimum value.

15. A device according to one of the claims 1 to 14, **characterized in that** the housing (5) has a round cylindrical shape.

16. A device according to one of the claims 5 to 15, **characterized in that** the measurement chamber (7) is adapted to be rotated about the cylinder axis of the housing (5).

17. A device according to claim 15 or 16, **characterized in that** a drive shaft (9) for rotating the measurement chamber (7) extends through at least one end wall (12) of the round cylindrical housing (5).

18. A device according to one of the claims 5 to 17, **characterized in that** the measurement chamber (7) is adapted to be rotated by means of a stepping motor, preferably via an intermediate transmission, or by means of at least one electromagnet (21) rotating the drive shaft (9) via a lever (23).

19. A device according to one of the claims 1 to 18, **characterized in that** the housing (5) includes a transparent wall member (13) and that preferably an end wall (13) of the round cylindrical housing (5) is transparent.

20. A device according to one of the claims 15 to 19, **characterized in that** the milk inlet (1) and the milk outlets (3, 4) are provided in the cylinder wall (2) of the round cylindrical housing (5), and that the milk outlets (3, 4) are preferably arranged in approximately diametrically opposed relationship with the milk inlet (1).

21. A device according to one of the claims 1 to 20, **characterized in that** at one position of the closure means (11) all the milk outlets (3, 4) can be shut off.

22. A device according to one of the claims 1 to 21, **characterized in that** the sensor means comprises electrodes (8) for detecting the conductivity of the milk.

23. A device according to one of the claims 1 to 22, **characterized in that** the sensor means comprises a temperature sensor (10) for detecting the milk temperature.

24. A device according to one of the claims 1 to 23, **characterized in that** the control means (33) comprises a control computer.

25. A device according to claim 24, **characterized in that** the control computer is programmed for controlling the directional valve means on the basis of a comparison of detected parameter values with predetermined parameter threshold values.

26. A device according to claim 24, **characterized in that** the control computer is programmed for correcting the detected parameter values or for adapting the parameter threshold values on the basis of stored parameter value/ time profiles related to the period of milking.

27. A device according to one of the claims 1 to 26, **characterized in that** the values that can preferably be detected as parameters are the conductivity of the milk, the protein content of the milk, the fat content of the milk, the urea content, the content of various enzymes and inhibitors or/ and the lactose content.

28. A device according to one of the claims 1 to 27, **characterized in that**, for temperature-dependent correction of detected milk conductivity values, the control computer is programmed on the basis of additionally measured milk temperature values or on the basis of a stored temperature/time profile related to the period of milking.

29. A device according to one of the claims 1 to 28, **characterized in that**, for correcting the measured milk conductivity, the control computer is programmed on the basis of a normal conductivity value for the rinsing agent measured during a rinsing process.

30. A device according to one of the claims 1 to 29, **characterized in that** a plurality of measurement means (8, 10, 33) and a plurality of directional valve means (28) are provided for each teat.

31. A device according to one of the claims 1 to 30, **characterized in that** the partial vacuum applied to the udder is adapted to be controlled by partially closing a milk outlet (3, 4) provided for discharging the milk.

32. A directional valve means comprising
a housing (5) provided with a milk inlet (1) and a plurality of milk outlets (3, 4), and a closure means (11) for selectively shutting off the milk outlets (3, 4),
**characterized in**
that the housing (5) has arranged therein a measurement chamber (7), which is in fluid communication with the interior of the housing via at least one opening (42) and which is provided with a sensor means (8, 10) for detecting milk parameter values.

## Revendications

1. Dispositif de sélection automatique du lait, lors de la traite mécanique, comportant
un dispositif de mesure (8, 10, 33) pour déterminer des valeurs de paramètre du courant de lait,
un dispositif distributeur (28) pour amener sélectivement le courant de lait dans une conduite (31, 32) ou une autre, et
un dispositif de commande (33) qui agit sur le dispositif distributeur (28) en vue de sélectionner le lait à partir des valeurs de paramètre déterminées,
**caractérisé** en ce que le dispositif distributeur (28) comporte une enveloppe (5) avec une entrée de lait (1) et plusieurs sorties de lait (3, 4), et un dispositif d'obturation (11) destiné à fermer sélectivement les sorties de lait (3, 4), et
en ce qu'il est prévu dans l'enveloppe une chambre de mesure (7) qui est en communication de fluide avec l'intérieur de l'enveloppe grâce à au moins une ouverture (42) et qui est pourvue d'un dispositif formant capteur (8, 10) pour enregistrer des valeurs de paramètre.

2. Dispositif selon la revendication 1, **caractérisé** en ce que le dispositif d'obturation (11) est disposé à l'intérieur de l'enveloppe (5) et est mobile afin de fermer sélectivement les sorties de lait (3, 4).

3. Dispositif selon la revendication 2, **caractérisé** en ce que la chambre de mesure (7) est reliée au dispositif d'obturation (11) et est mobile, avec celui-ci, pour fermer sélectivement les sorties de lait (3, 4), et le dispositif d'obturation (11) est mobile en particulier par l'intermédiaire de la chambre de mesure (7).

4. Dispositif selon la revendication 3, **caractérisé** en ce que le dispositif d'obturation est réalisé d'une seule pièce avec la chambre de mesure.

5. Dispositif selon la revendication 3 ou 4, **caractérisé** en ce que la chambre de mesure (7) est apte à tourner autour d'un axe (9) avec le dispositif d'obturation (11) pour fermer sélectivement les sorties de lait.

6. Dispositif selon l'une des revendications 1 à 5, **caractérisé** en ce que le dispositif d'obturation est conçu comme une vanne d'arrêt (11) couvrant les sorties de lait (3, 4).

7. Dispositif selon la revendication 6, **caractérisé** en ce qu'une surface d'obturation de la vanne d'arrêt (11) tournée vers les sorties de lait (3, 4) a le même rayon de courbure qu'une section de paroi d'enveloppe pourvue desdites sorties de lait (3, 4), de sorte que celles-ci peuvent être obturées sélectivement grâce à un pivotement de la vanne d'arrêt (11) autour d'un axe de rotation traversant le centre de la courbure.

8. Dispositif selon l'une des revendications 1 à 7, **caractérisé** en ce que la chambre de mesure (7) est conçue comme un récipient ouvert d'un côté, avec le dispositif d'obturation (11) au fond du récipient.

9. Dispositif selon la revendication 8, **caractérisé** en ce qu'il est prévu au-dessus de l'ouverture de récipient (42) une plaque de choc (38) présentant des passages (39), pour la régulation du courant de lait entrant directement dans la chambre de mesure (7) à partir de l'entrée de lait (1) .

10. Dispositif selon la revendication 8 ou 9, **caractérisé** en ce que l'ouverture de récipient (42), dans toutes les positions d'obturation du dispositif d'obturation (11), est disposée pratiquement en face de l'entrée de lait (1).

11. Dispositif selon l'une des revendications 5 à 10, **caractérisé** en ce que la chambre de mesure (7) est destinée à tourner en permanence autour de l'axe (9) pendant un nettoyage.

12. Dispositif selon l'une des revendications 1 à 10, **caractérisé** en ce que la chambre de mesure (7) a une ouverture (35) rendue étanche grâce à une section de paroi (12) de l'enveloppe (5), avec des dimensions telles qu'au moins un dispositif formant capteur (8, 10) prévu sur la section de paroi d'enveloppe (12) est en communication de fluide avec la chambre de mesure (7) pour enregistrer les paramètres du lait dans n'importe quelle position d'obturation du dispositif d'obturation (11).

13. Dispositif selon la revendication 11, **caractérisé** en ce qu'il est prévu un dispositif faisant ressort (19, 37) par l'intermédiaire duquel la chambre de mesure (7) est apte à être pressée contre la section de paroi d'enveloppe (12) pour rendre l'ouverture (35) étanche.

14. Dispositif selon l'une des revendications 1 à 13, **caractérisé** en ce que la chambre de mesure (7) a au moins une ouverture d'écoulement (40, 41) grâce à laquelle l'évacuation de la chambre de mesure (7) est garantie dans au moins une position d'obturation du dispositif d'obturation lorsque l'afflux de lait par l'entrée de lait (1) devient inférieur à une valeur minimale prédéfinie.

15. Dispositif selon l'une des revendications 1 à 14, **caractérisé** en ce que l'enveloppe (5) a une forme cylindrique ronde.

16. Dispositif selon l'une des revendications 5 à 15, **caractérisé** en ce que la chambre de mesure (7) est apte à tourner autour de l'axe de cylindre de l'enveloppe (5).

17. Dispositif selon la revendication 15 ou 16, **caractérisé** en ce qu'un arbre moteur (9) destiné à faire tourner la chambre de mesure (7) traverse au moins une paroi frontale (12) de l'enveloppe cylindrique ronde (5).

18. Dispositif selon l'une des revendications 5 à 17, **caractérisé** en ce que la chambre de mesure (7) est apte à tourner grâce à un moteur pas à pas, de préférence par l'intermédiaire d'une transmission intermédiaire, ou grâce à au moins un électro-aimant (21) qui fait tourner l'arbre moteur (9) par l'intermédiaire d'un levier (23).

19. Dispositif selon l'une des revendications 1 à 18, **caractérisé** en ce que l'enveloppe (5) comporte une partie de paroi transparente (13), et une paroi frontale (13) de l'enveloppe cylindrique ronde (5) est de préférence transparente.

20. Dispositif selon l'une des revendications 15 à 19, **caractérisé** en ce que l'entrée de lait (1) et les sorties de lait (3, 4) sont prévues dans la paroi cylindrique (2) de l'enveloppe cylindrique ronde (5), et les sorties de lait (3, 4) sont de préférence à peu près diamétralement opposées à l'entrée de lait (1).

21. Dispositif selon l'une des revendications 1 à 20, **caractérisé** en ce que dans une position du dispositif d'obturation (11), toutes les sorties de lait (3, 4) sont aptes à être fermées.

22. Dispositif selon l'une des revendications 1 à 21, **caractérisé** en ce que le dispositif formant capteur comprend des électrodes (8) pour enregistrer la conductibilité du lait.

23. Dispositif selon l'une des revendications 1 à 22, **caractérisé** en ce que le dispositif formant capteur comprend une sonde de température (10) pour enregistrer la température du lait.

24. Dispositif selon l'une des revendications 1 à 23, **caractérisé** en ce que le dispositif de commande (33) comprend un ordinateur de commande.

25. Dispositif selon la revendication 24, **caractérisé** en ce que l'ordinateur de commande est programmé pour commander le dispositif distributeur à l'aide d'une comparaison de valeurs de paramètre enregistrées avec des valeurs seuils de paramètre définies.

26. Dispositif selon la revendication 24, **caractérisé** en ce que l'ordinateur de commande est programmé pour corriger les valeurs de paramètre enregistrées ou pour adapter les valeurs seuils de paramètre à partir de courbes temporelles de valeurs de paramètre mises en mémoire et concernant la durée de la traite.

27. Dispositif selon l'une des revendications 1 à 26, **caractérisé** en ce qu'on peut enregistrer comme paramètre de préférence la conductibilité du lait, sa teneur en protéines, en graisse, en urée, sa teneur en différents enzymes et inhibiteurs ou/et sa teneur en lactose.

28. Dispositif selon l'une des revendications 1 à 27, **caractérisé** en ce que l'ordinateur de commande est programmé pour corriger les valeurs de conductibilité du lait enregistrées, en fonction de la température, à l'aide de valeurs de température du lait mesurées en supplément, ou d'une courbe température-temps mise en mémoire et concernant la durée de la traite.

29. Dispositif selon l'une des revendications 1 à 28, **caractérisé** en ce que l'ordinateur de commande est programmé pour corriger la conductibilité du lait mesurée, à l'aide d'une valeur normale de conductibilité mesurée pour le produit de nettoyage pendant un nettoyage.

30. Dispositif selon l'une des revendications 1 à 29, **caractérisé** en ce qu'il est prévu un dispositif de mesure (8, 10, 33) et un dispositif distributeur (28) pour chaque trayon.

31. Dispositif selon l'une des revendications 1 à 30, **caractérisé** en ce que la dépression appliquée au niveau de la mamelle est apte à être commandée grâce à une obturation partielle d'une sortie de lait (3, 4) prévue pour l'écoulement du lait.

32. Dispositif distributeur avec une enveloppe (5) présentant une entrée de lait (1) et plusieurs sorties de lait (3, 4), et un dispositif d'obturation (11) destiné à fermer sélectivement les sorties de lait (3, 4),
**caractérisé** en ce qu'il est prévu dans l'enveloppe (5) une chambre de mesure (7) qui est en communication de fluide avec l'intérieur de l'enveloppe grâce à au moins une ouverture (42), et qui est pourvue d'un dispositif formant capteur (8, 10) pour enregistrer des valeurs de paramètre du lait.
